# EUROPÄISCHE PATENTSCHRIFT

(11) **EP 1 792 023 B1**
(45) Veröffentlichungstag und Bekanntmachung des Hinweises auf die Patenterteilung: **03.03.2010**
(21) Anmeldenummer: 05783648.8
(22) Anmeldetag: 20.09.2005
(51) Int. Cl.: E04B 1/80, F16B 5/00

(54) **DÄMMSTOFFELEMENT AUS MINERALFASERN UND VERFAHREN ZU SEINER HERSTELLUNG**
INSULATING ELEMENT MADE OF MINERAL FIBERS AND METHOD FOR THE PRODUCTION THEREOF
ELEMENT EN MATERIAU ISOLANT EN FIBRES MINERALES ET PROCEDE DE PRODUCTION ASSOCIE

(30) Priorität: 25.09.2004 DE 202004015001 U; 21.07.2005 DE 102005034037
(43) Veröffentlichungstag der Anmeldung: 06.06.2007
(73) Patentinhaber: Deutsche Rockwool Mineralwoll GmbH & Co. OHG, 45966 Gladbeck (DE)
(72) Erfinder: KLOSE, Gerd-Rüdiger, 46286 Dorsten (DE); NOWACK, Peter, 45891 Gelsenkirchen (DE)
(74) Vertreter: Stenger, Watzke & Ring
(86) Internationale Anmeldenummer: PCT/EP2005/010092
(87) Internationale Veröffentlichungsnummer: WO 2006/032440

(56) Entgegenhaltungen:
- EP-A- 0 543 354
- EP-A- 0 936 321
- EP-A- 1 203 547
- AT-B- 388 042
- DE-A1- 4 032 769
- US-A- 4 361 659

## Beschreibung

Die Erfindung betrifft ein Dämmstoffelement aus Mineralfasern, vorzugsweise aus Steinwolle, in Form einer Platte oder einer Bahn, mit zwei großen Oberflächen, die im Abstand und parallel zueinander verlaufend angeordnet und über Seitenflächen miteinander verbunden sind, wobei die Seitenflächen rechtwinklig zueinander ausgerichtet sind und zumindest eine Seitenfläche eine Profilierung, insbesondere in Form einer Feder oder einer Nut aufweist. Die Erfindung betrifft ferner ein Verfahren zur Herstellung eines Dämmstoffelementes aus Mineralfasern, vorzugsweise aus Steinwolle, in Form einer Platte oder einer Bahn, mit zwei großen Oberflächen, die im Abstand und parallel zueinander verlaufend angeordnet und über Seitenflächen miteinander verbunden sind, wobei die Seitenflächen rechtwinklig zueinander ausgerichtet sind und zumindest eine Seitenfläche eine Profilierung, insbesondere in Form einer Feder oder einer Nut aufweist.

Dämmstoffelemente aus Mineralfasern bestehen aus künstlich hergestellten glasig erstarrten Mineralfasern, die einen mittleren Durchmesser von ca. 6 bis 8 µm aufweisen. Diese Mineralfasern werden in einem sehr lockeren dreidimensionalen Haufwerk angeordnet und mit überwiegend organischen Bindemitteln partiell gebunden. Dieses dreidimensionale Haufwerk ist relativ lichtdurchlässig, so dass Licht verhältnismäßig tief in das Haufwerk eindringen kann.

Als organische Bindemittel werden vielfach duroplastisch aushärtende Phenol-, Formaldehyd- und/oder Harnstoffharze verwendet. Gelegentlich wird ein Teil dieser Harze auch durch Polysaccharide substituiert. Die Harze enthalten in geringen Mengen haftvermittelnde Stoffe, wie beispielsweise Silane. Filmbildende thermoplastische Bindemittel werden darüber hinaus vereinzelt für die Bindung von flexiblen Dämmstoffelementen verwendet.

Die Anteile an organischen Bindemitteln in den Dämmstoffelementen sind gering und reichen bei weitem nicht aus, um alle Mineralfasern im Idealfall punktweise miteinander zu verbinden. Um die Eigenschaft der Nichtbrennbarkeit der Dämmstoffelemente und ihren elastisch-federnden Charakter zu erhalten und gleichzeitig auch die Herstellungskosten zu begrenzen, werden im Allgemeinen nicht mehr als ca. 12 Masse-% Trockensubstanz des Bindemittels eingesetzt. Bei Dämmstoffelementen aus Steinwolle, die beispielsweise mit Hilfe von Kaskaden-Spinnmaschinen hergestellt werden, enthalten die Dämmstoffelemente in der Regel nicht mehr als ca. 2 bis ca. 4,5 Masse-% Trockensubstanz des Bindemittels.

In der Regel ist es bei Dämmstoffelementen aus Mineralfasern erforderlich, dass diese primär wasserabweisend ausgebildet sind. Diese Eigenschaft wird ebenso wie die verbesserte Bindung von feinsten Mineralfasern, dass heißt eine Staubbindung dadurch erreicht, dass beispielsweise Substanzen, wie hochsiedende Mineralöle, Öl-in-Wasser-Emulsionen, Wachse, Silikonöle und -harze den Bindemitteln zugefügt werden. Diese Substanzen werden insgesamt als Zusatz- oder als Schmälzmittel bezeichnet. Beispielsweise wird bei der Herstellung von Dämmstoffelementen aus Mineralfasern, insbesondere aus Steinwolle, ein Anteil von 0,1 bis ca. 0,4 Masse-% Mineralöl im Bindemittel verwendet. Diese Mineralöle bzw. Zusatz- oder Schmälzmittel verteilen sich wesentlich gleichmäßiger in den Dämmstoffelementen, als das Bindemittel, wobei sich auf den Mineralfasern Filme bilden, die eine Materialdicke von wenigen Nanometern aufweisen.

Die Bindemittel sind als kompakte Körper opak bis lichtundurchlässig ausgebildet und liegen in den Dämmstoffelementen aus Mineralfasern in relativ hoher Dispersion als Tröpfchen oder in Filmabschnitten vor. In dieser Dispersion sind die Bindemittel lichtdurchlässig, so dass sie auch für UVA- und UVB-Strahlungen durchlässig sind. Diese Strahlungsanteile wirken sich zusammen mit IR-Strahlungen negativ auf die Kunststoffe in den Bindemitteln aus, die hierdurch verspröden und sich dabei gleichzeitig beispielsweise bräunlich verfärben. Da die Strahlung bis in die Grenzflächen zwischen den Kunststoffen der Bindemittel und den Oberflächen der Mineralfasern wirksam ist, verringert sich die Haftung und damit die Festigkeit der Dämmstoffelemente aus Mineralfasern durch die Einwirkung des Sonnenlichts.

Weiterhin verlieren auch die verwendeten Mineralöle unter Einwirkung dieser Strahlungen ihre Wirksamkeit. Hinsichtlich der Mineralöle bietet sich als Alternative die Verwendung von oxidationsbeständigeren Silikonölen und -harzen an. Silikonöle und -harze werden aber wegen der Kontaminationsgefahr im Bereich angrenzender Bauteile nicht verwendet.

Durch den Abbau der Bindemittel verlieren die Dämmstoffelemente aus Mineralfasern an Festigkeit und nehmen Wasser auf. Gleichzeitig verändert sich naturgemäß ihr Aussehen, welches oftmals zumindest als optischer Mangel bewertet wird. Diese Verwitterungseffekte sind zwar auf die jeweiligen Oberflächenschichten der Dämmstoffelemente aus Mineralfasern und den unmittelbar darunter liegenden Zonen beschränkt, dennoch kann hierdurch eine kontinuierliche Freisetzung der Mineralfasern erfolgen, welche die Umgebung beeinträchtigt.

Dämmstoffelemente aus Mineralfasern werden mit ihren großen Oberflächen mit profilierten Blechen verklebt und bilden Sandwich-Elemente. Die Profilierung der Bleche kann unterschiedlich ausgebildet sein, wobei ein Sandwich-Element aus einer mittleren Lage aus Dämmstoffelementen aus Mineralfasern und zwei außenliegenden profilierten Blechen besteht. Aus derartigen Sandwich-Elementen werden sowohl Gebäudewandungen als auch Dächer für Gebäude hergestellt. Die im Gebäude außenliegenden Bleche sind bei diesen Sandwich-Elementen üblicherweise mit einer stärkeren Profilierung bzw. mit ausgeprägten Sicken ausgebildet. Beispielsweise sind derartige Sandwich-Elemente bekannt, deren im Gebäude außenliegendes Blech gewellt ausgebildet ist. Die im Gebäude innenliegenden Bleche weisen üblicherweise lediglich Prägungen und/oder flache Sicken auf, die diesen Blechen eine paneelartige Struktur geben.

Als zwischen den Blechen angeordnete Dämmstoffelemente werden solche aus einer nicht brennbaren Mineralwolle mit einem Schmelzpunkt > 1.000° C nach DIN 4101, Teil 17 verwendet, die in der Regel Rohdichten von zumeist über 100 kg/m³ aufweisen und bei denen die Fasern überwiegend in einer steilen Lagerung und/oder rechtwinklig zu den großen Oberflächen des Dämmstoffelementes angeordnet sind. Die Herstellung derartiger Dämmstoffelemente ist beispielsweise in der US-A-5 981 024 beschrieben. Die aus dieser Druckschrift vorbekannten Dämmstoffelemente weisen eine stegartige Anordnung auf. Die voranstehend beschriebene Orientierung der Mineralfasern rechtwinklig zu den großen Oberflächen bzw. in einer steilen Lagerung hierzu dient in erster Linie der Erhöhung der Querzugfestigkeit der Dämmstoffelemente rechtwinklig zu den großen Oberflächen. Durch die stegartige Anordnung wird die Steifigkeit parallel zur Ausrichtung der stegartigen Anordnung erhöht.

Die Dämmstoffelemente werden mit glatten Oberflächen oder mit weitgehend entsprechend der Profilierung der Bleche ausgebildeten Oberflächenkonturen hergestellt. Zwischen den Dämmstoffelementen und den Blechen ist eine Kleberschicht, vorzugsweise aus einem Polyurethan-Kleber angeordnet, mit der die Dämmstoffelemente als auch die mit Korrosionsschutzschichten ausgerüsteten Bleche ausreichend beschichtet sind, so dass die Kleberschicht unter anderem auch durch Abmessungstoleranzen bedingte Hohlräume zwischen den Dämmstoffelementen und den Blechen nahezu vollständig auffüllen. Letztendlich führt die Verklebung der Dämmstoffelemente mit den Blechen zu festen zähplastischen Verbindungen. Um die beiden voranstehend genannten Aufgaben der Kleberschicht zu erfüllen, werden diese Kleberschichten mit einer Materialstärke zwischen 0,5 und 5 mm auf die Dämmstoffelemente bzw. die Bleche aufgetragen, wobei im Bereich der Scheitelpunkte von Krümmungen der Bleche größere Materialstärken der Kleberschicht aufgetragen werden.

Eine wirtschaftliche Fertigung derartiger Sandwich-Elemente erfolgt in der Regel dadurch, dass die Dämmstoffelemente im erforderlichen Maß von einer endlosen Mineralfaserbahn abgetrennt und anschließend mit den Blechen verklebt werden.

Der Vorteil dieser Sandwich-Elemente im Vergleich zu Bauelementen aus zueinander im Abstand angeordneten Blechschalen und einem zwischen den Blechschalen angeordneten Ortschaum aus Polyurethan oder Polyisocyanurat liegt insbesondere darin, dass die Brandlast der Sandwich-Elemente mit den zwischen den Blechschalen angeordneten Dämmstoffelementen aus Mineralfasern deutlich verringert und die Feuerwiderstandsdauer derartiger Bauteile beträchtlich erhöht ist. Somit können derartige Sandwich-Elemente nicht nur als Gebäudebauteile für Wände und Dächer, sondern auch als Brandschutzpaneele eingesetzt werden.

Die Dämmstoffelemente aus Mineralfasern haben zwei große Oberflächen, die voranstehend bereits dahingehend beschrieben wurden, dass diese mit den Blechen verklebt werden. Darüber hinaus weisen die Dämmstoffelemente aus Mineralfasern vier Seitenflächen auf, die in der Regel rechtwinklig zueinander ausgerichtet sind und rechtwinklig an die Oberflächen anschließen und diese beabstandet zueinander angeordneten Oberflächen miteinander verbinden. Zumindest eine Seitenfläche, insbesondere aber zwei gegenüberliegend angeordnete Seitenflächen weisen eine Profilierung auf, wie sie beispielsweise in der DE-A-41 33 416 als Nut oder Feder dargestellt ist. Diese Profilierung ermöglicht ein fugendichtes Zusammenstoßen benachbarter Dämmstoffelemente aus Mineralfasern, wobei Wärmebrücken durch Unstetigkeitsstellen zwischen benachbarten Dämmstoffelementen aus Mineralfasern im Wesentlichen vermieden werden.

Durch diese Profilierungen, insbesondere der längsseitigen Seitenflächen und eine darauf abgestimmte Formgebung der Bleche, besteht die Möglichkeit, die einzelnen mit Mindestdicken von größenordnungsmäßig 75 mm und ca. 600 mm und Breiten bis ca. 1200 mm ausgebildete Sandwich-Elemente formschlüssig miteinander zu verbinden. Hierbei hat sich eine möglichst ausgeprägte Profilierung als vorteilhaft erwiesen, damit die Fugen zwischen benachbarten Sandwich-Elementen im Brandfall trotz der unvermeidlichen Verwerfungen der metallischen Bleche geschlossen bleiben. Vorzugsweise ist auf einer Längsseite des Dämmstoffelementes eine Feder und auf der gegenüberliegenden, parallel verlaufenden Seitenfläche eine Nut ausgebildet, wobei die Feder die Nut vollständig ausfüllt. Ergänzend können leistenartige Ausformungen vorgesehen seien, die die Abdichtung der voranstehend beschriebenen Fugen benachbarter Dämmstoffelemente weiter verbessern. Die Dämmstoffelemente aus Mineralfasern sind durch die überwiegend rechtwinklig zu den großen Oberflächen orientierten Mineralfasern quer zu ihrer Längsrichtung kompressibel ausgebildet, so dass sich insbesondere die Seitenflächen mit der Profilierung und den gegebenenfalls vorgesehenen leistenförmig hervorstehenden Abschnitten eng an das benachbarte Sandwich-Element anpassen lassen. Die Profilierungen selbst weisen eng begrenzte Passungen auf, die aber so dimensioniert sind, dass ein leichtes Ineinanderfügen der Profilierungen möglich ist.

Ferner wird durch die Ausrichtung der Mineralfasern überwiegend rechtwinklig zu den großen Oberflächen des Dämmstoffelementes die Querzugfestigkeit in horizontaler Richtung verringert, so dass sich die hervorstehenden Bestandteile der Profilierung in einfacher Weise abscheren lassen. Um ein solches unbeabsichtigtes Abscheren der Bestandteile der Profilierung zu vermeiden, könnte der Bindemittelanteil in den Dämmstoffelementen aus Mineralfasern erhöht bzw. die Verteilung des Bindemittels verbessert werden, so dass bindemittelfreie oder bindemittelarme Bereiche, insbesondere in den Bestandteilen der Profilierung, vermieden werden. Eine derartige Vorgehensweise würde aber dazu führen, dass die voranstehend beschriebene Brandlast der daraus hergestellten Sandwich-Elemente erhöht wird.

Des Weiteren hat eine derartige Vorgehensweise den Nachteil, dass die Kompressibilität und die Flexibilität der Profilierung nachteilig verändert wird, woraus sich ein erschwertes Zusammenfügen der benachbarten Sandwich-Elemente ergibt. Die verringerte Flexibilität und Kompressibilität führt dann wiederum zu einer erhöhten Gefahr, Bestandteile der Profilierung abzubrechen bzw. so zu verdrängen, dass diese aus dem Gefüge mehrerer Dämmstoffelemente aus Mineralfasern herausquellen und insofern die Passungen verändern. Letztendlich können hierdurch Unstetigkeitsstellen verursacht werden, welche wegen der Gefahr der Rauchdurchleitung die Feuerwiderstandsfähigkeit der zusammengesetzten Sandwich-Elemente wesentlich verringern können.

Die voranstehend beschriebenen Sandwich-Elemente werden nach ihrer Verlegung im Wand- oder Deckenbereich mit einer Tragkonstruktion verbunden. Hierzu werden Befestigungsmittel, wie beispielsweise Schrauben verwendet, mit denen die Sandwich-Elemente an der Tragkonstruktion verankert und die Deckbleche kraftschlüssig miteinander verbunden werden.

Durch die Ausgestaltung der Randbereiche der Bleche werden Längsfugen derart abgedeckt, dass sie keinen Witterungseinflüssen ausgesetzt sind. Die Seitenflächen der Sandwich-Elemente bleiben jedoch offen, wobei es im Bereich der Ausgestaltung eines Daches aus derartigen Sandwich-Elementen üblich ist, diese Seitenflächen durch obere und untere Firstbleche nach außen und zum Innenraum hin abzudecken. Entlang von Traufen werden die Seitenflächen durch ein abgekantetes Blech abgedeckt, das zwischen der Tragkonstruktion bzw. der Dachunterkonstruktion, einem Rinneneinlaufblech und dem unteren Blech des Sandwich-Elementes eingeschoben und zusammen mit den beiden Blechen des Sandwich-Elementes befestigt wird.

Die unterschiedlichen Ausgestaltungen derartiger Sandwich-Elemente macht es aber erforderlich, dass entsprechende Bleche auf die Sandwich-Elemente exakt abgestimmt sind, so dass die erforderlichen Deckbleche entsprechend den zu verwendenden Sandwich-Elementen vorgehalten und verarbeitet werden müssen. Ergänzend wird ein Windleitblech im Dachbereich vorgesehen, das einen Teil des Witterungsschutzes übernimmt und auf dem im Gebäude außenliegenden Blech des Sandwich-Elementes befestigt wird.

Ein Dämmstoffelement nach dem Oberbegriff des Anspruchs 1 und sein Herstellungsverfahren nach dem Oberbegriff des Anspruchs 14 ist aus AT-B-388 042 bekannt.

Ausgehend von diesem Stand der Technik liegt der Erfindung die **Aufgabe** zugrunde, ein Dämmstoffelement aus Mineralfasern derart weiterzubilden, dass die voranstehend beschriebenen Nachteile des Standes der Technik, insbesondere im Bereich der Profilierung vermieden werden und das Dämmstoffelement des Weiteren insbesondere im Bereich der Seitenflächen derart stabilisiert ist, dass es insbesondere in Verbindung mit Blechen eines Sandwich-Elementes ohne Gefahr der Beschädigung der Seitenflächen, insbesondere der Profilierung zusammensetzbar ist. Es ist ferner **Aufgabe** der Erfindung, ein gattungsgemäßes Verfahren zur Herstellung derartiger Dämmstoffelemente anzugeben, das in einfacher und insbesondere kostengünstiger Weise durchführbar ist.

Zur **Lösung** dieser Aufgabenstellung ist seitens eines Dämmstoffelementes vorgesehen, dass die Seitenflächen im Bereich der Profilierung eine die Profilierung stabilisierende Beschichtung aufweisen , wobei die Beschichtung auf Flächen angeordnet ist, die im Wesentlichen parallel zu den großen Oberflächen ausgerichtet sind und wobei die Flächen, die im Wesentlichen parallel zu den Seitenflächen ausgerichtet sind frei von der Beschichtung sind.

Durch die Beschichtung der Seitenflächen im Bereich der Profilierung werden diese Bereich des Dämmstoffelementes aus Mineralfasern vor Witterungseinflüssen ergänzend geschützt. Darüber hinaus führt diese Beschichtung zu einer Stabilisierung der Seitenflächen im Bereich der Profilierung, wodurch die Freisetzung von Mineralfasern und damit auch von staubförmigen Partikeln vermindert wird. Bei der Auswahl der für die Beschichtung geeigneten Materialien ist zu beachten, dass diese die Baustoffklasse der Dämmstoffelemente nicht verändern sollen. Dies gilt insbesondere für solche Materialien, die im Anschluss an die Herstellung der Dämmstoffelemente aus Mineralfasern eingebracht oder aufgebracht werden, wenngleich dünne Schichten einer derartigen Beschichtung auch dann im Brandfall unter Umständen keine bemerkenswerte Rolle spielen, wenn es sich um brennbare Stoffe handelt.

Als besondere geeignet hat sich daher die Ausbildung der Beschichtung aus einer Dispersions-Silikatfarbe nach DIN 18363 erwiesen. Eine derartige Dispersions-Silikatfarbe lässt sich in einfacher und insbesondere deckender Weise auf die Seitenflächen des Dämmstoffelementes auftragen. Zwar enthalten Silikatfarben oder Dispersions-Silikatfarben nach DIN 18363 in der Regel organische Polymer-Dispersionen, beispielsweise Reinacrylate, Styrol-Acrylate oder Terpolymere sowie sonstige organische Dispergiermittel Stabilisatoren, rheologische Additive, Filmbildehilfsmittel sowie Hydrophobiermittel, diese Bestandteile liegen aber in einem derart geringen Anteil vor, dass eine Beeinträchtigung der Baustoffklasse von damit ausschließlich im Bereich der Seitenflächen bearbeiteten Dämmstoffelementen aus Mineralfasern nicht gegeben ist.

Die voranstehend genannten Silikatfarben oder Dispersionssilikatfarben enthalten als mengenmäßig größte Komponenten Füllstoffe und Pigmente. Um eine gleichbleibende Wirksamkeit der Silikatfarben oder Dispersionssilikatfarben einschließlich einer guten Haftung auf dem Untergrund, nämlich den Mineralfasern, wie auch eine ausreichende Witterungsbeständigkeit zu erreichen, werden die Füllstoffe und Pigmente derart ausgewählt, dass diese möglichst wenig mit den silikatischen Bindemitteln der Dämmstoffelemente aus Mineralfasern reagieren. Vorzugsweise werden die Füllstoffe und Pigmente derart ausgewählt, dass eine Reaktion zwischen diesen Füllstoffen und Pigmenten und den silikatischen Bindemitteln nicht stattfindet.

Nach einem weiteren Merkmal der Erfindung ist vorgesehen, dass die Beschichtung aus Wasserglas, insbesondere aus Kalium-Wasserglas und/oder Natrium-Wasserglas besteht. Diese Bestandteile können auch in den üblichen Farbsystemen aus Silikatfarben oder Dispersions-Silikatfarben Verwendung finden, da insbesondere das sich bildende Natriumkarbonat-Hydrat im Brandfall eine positive Auswirkung auf das Brandverhalten des Dämmstoffelementes hat.

Nach einer Weiterbildung dieser Ausgestaltung ist vorgesehen, dass das Wasserglas mit einer Polymer-Dispersion und/oder Füllstoffen, wie beispielsweise Dolomit, Kaolin oder dergleichen gemischt ist. Diese Füllstoffe reagieren mit dem Wasserglas. Als geeignete organische Bindemittel sind hier organisch modifizierte Silane vorgesehen.

Vorzugsweise ist die Beschichtung mehrschichtig ausgebildet, wobei zumindest eine Schicht aus Wasserglas und zumindest eine Schicht aus einer Polymer-Dispersion besteht.

Erfindungsgemäß ist es vorgesehen, dass die Profilierung Flächen aufweist, die im Wesentlichen parallel zu den großen Oberflächen ausgerichtet sind und Flächen hat, die im Wesentlichen parallel zu den Seitenflächen ausgerichtet sind, wobei die im Wesentlichen parallel zu den großen Oberflächen ausgerichteten Flächen die Beschichtung aufweisen und die im Wesentlichen parallel zu den Seitenflächen ausgerichteten Flächen frei von Beschichtung sind. Beispielsweise kann eine Profilierung vorgesehen sein, die parallel oder schräg zu den großen Oberflächen verlaufende Flanken aufweisen. Bei der voranstehend dargestellten Ausgestaltung bleiben somit die Stirnflächen der Profilierung, nämlich beispielsweise der Nutgrund und der auf dem Nutgrund bei ineinander gesteckten benachbarten Sandwich-Elementen aufliegende Steg der Feder des benachbarten Sandwich-Elements frei von Bindemittel, so dass die Elastizität der Dämmstoffelemente in diesem Bereich erhalten bleibt. Hierdurch wird die Anpassbarkeit der Dämmstoffelemente erhöht. Beispielsweise können hierdurch auch Fertigungstoleranzen der Dämmstoffelemente im Bereich der Profilierung ausgeglichen werden.

Die Mineralfasern sind im Wesentlichen rechtwinklig und/oder schräg zu den großen Oberflächen ausgerichtet. Es ist ferner vorgesehen, dass die Beschichtung filmbildend und insbesondere Wasserdampf bremsend ausgebildet ist, so dass im Bereich der Fugen zwischen benachbarten Dämmstoffelementen bzw. Sandwich-Elementen eine zumindest Wasserdampf bremsende Wirkung erzielt wird, welche die Diffusion von Wasserdampf zumindest stark beschränkt.

Nach einem weiteren Merkmal der Erfindung ist vorgesehen, dass die Beschichtung eine Kaschierung, insbesondere eine Metallfolie aufweist, die die Wasserdampf bremsende Wirkung verbessert und Wasserdampf sperrend wirkt.

Die Beschichtung ist teilweise als Imprägnierung ausgebildet, die in einen oberflächennahen Bereich der Profilierung eingearbeitet ist. Hierdurch wird eine verbesserte Haftung der Beschichtung an den hydrophob ausgebildeten Mineralfasern erzielt.

Nach einem weiteren Merkmal der Erfindung ist vorgesehen, dass die Profilierung im Bereich der im Wesentlichen parallel zu den Seitenflächen ausgerichteten Flächen eine Beschichtung aufweist, die von der Beschichtung auf den im Wesentlichen parallel zu den großen Oberflächen ausgerichteten Flächen der Profilierung abweicht. Insbesondere ist vorgesehen, dass die Beschichtung im Bereich der im Wesentlichen parallel zu den Seitenflächen ausgerichteten Flächen aus einer silikatischen Grundierung und einer darauf aufgebrachten Dispersions-Silikatfarbe gemäß DIN 18363 oder einer darauf aufgebrachten Farbe auf der Basis von Synthese-Latices besteht.

Schließlich ist bei einem erfindungsgemäßen Dämmstoffelement vorgesehen, dass die freien Kanten der Profilierung Fasen aufweisen, die insbesondere dann von Vorteil sind, wenn die Profilierung im Bereich ihrer Oberflächen mit metallischen Deckschichten kaschiert sind. Durch die Fasen wird einer möglicherweise auftretenden Spaltbildung zwischen den metallischen Deckschichten einerseits und einer Kleber- sowie Dämmstoffschicht andererseits und damit einer kapillaren Wasseraufnahme entgegengewirkt. Gleiches gilt hinsichtlich einer möglichen Spaltbildung zwischen der Kleberschicht und der Dämmstoffschicht.

Zur **Lösung** der Aufgabenstellung ist bei einem erfindungsgemäßen Verfahren vorgesehen, dass die die Profilierung stabilisierende Beschichtung, insbesondere deren Komponenten auf Flächen aufgebracht wird, die im Wesentlichen zu den großen Oberflächen ausgerichtet sind, während Flächen, die im Wesentlichen parallel zu den Seitenflächen ausgerichtet sind frei von der Beschichtung gehalten werden.

Beispielsweise wird die Beschichtung aufgespritzt, wobei es sich als vorteilhaft erwiesen hat, die Komponenten der Beschichtung nacheinander aufzutragen, insbesondere aufzuspritzen. Eine Alternative hierzu sieht vor, dass die Komponenten der Beschichtung vor dem Auftragen gemischt und anschließend gemeinsam aufgetragen werden. Hierdurch wird eine bessere Durchmischung der Beschichtungskomponenten erzielt, wobei selbstverständlich auch eine getrennte Vorgehensweise vorteilhaft sein kann, soweit beispielsweise eine Grundierung aufgetragen wird, die einen verbesserten Haftgrund für die anschließend aufzutragende Komponente der Beschichtung bietet.

So ist es vorteilhaft, vor dem Auftrag von Farbschichten den Untergrund durch ein farbloses Imprägniermittel zu stabilisieren. Als Imprägniermittel können echte Lösungen, wie auch kolloidal gelöste Stoffe bis hin zu Dispersionen Verwendung finden. Die anschließend aufzutragenden silikatischen Farbsysteme können auch hydrophobierende Komponenten enthalten. Für die Herstellung witterungsbeständiger Farbsysteme können auch Elastomere, wie beispielsweise Butylkautschuk-Latices verwendet werden. Derartig aufgebaute Farben sind insbesondere für die werksseitige Beschichtung von Dämmstoffelementen geeignet.

Dem erfindungsgemäßen Verfahren werden insbesondere Gemische von Wassergläsem und Polymer-Dispersionen, gegebenenfalls mit den üblichen Füll- und Hilfsstoffen durch Spritzen auf die zu beschichtenden Oberflächen aufgebracht.

Weitere Merkmale und Vorteile der Erfindung ergeben sich aus der nachfolgenden Beschreibung der zugehörigen Zeichnung, in der bevorzugte Ausführungsformen eines Dämmstoffelementes aus Mineralfasern dargestellt sind. In der Zeichnung zeigen:
- Figur 1: ein Dämmstoffelement aus Mineralfasern im Längsschnitt und
- Figur 2: eine Profilierung des Dämmstoffelementes gemäß Figur 1 im Längsschnitt.

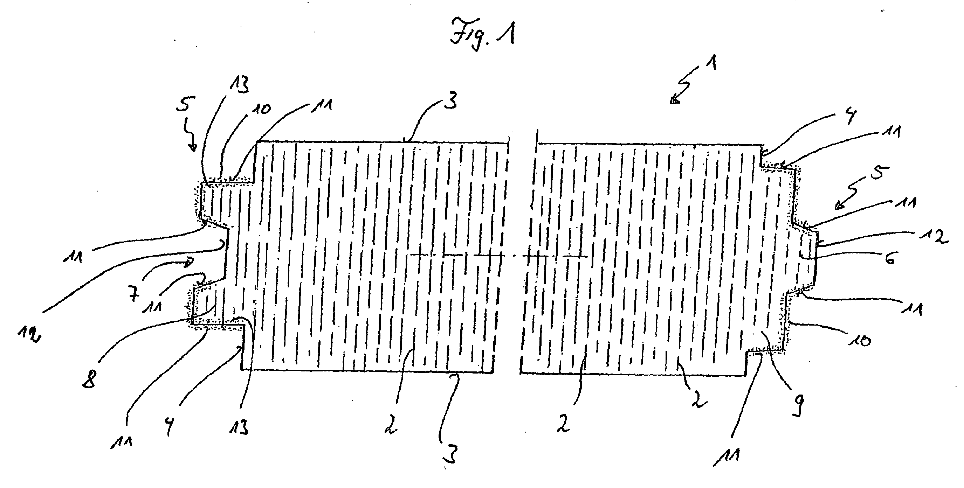

Ein in Figur 1 dargestelltes Dämmstoffelement 1 besteht aus mit Bindemitteln gebundenen Mineralfasern 2 und weist zwei große Oberflächen 3 auf, die im Abstand und parallel zueinander verlaufend angeordnet sind. Die großen Oberflächen 3 sind über vier Seitenflächen 4 miteinander verbunden, wobei in Figur 1 lediglich zwei Seitenflächen 4 dargestellt sind, die parallel und rechtwinklig zu den großen Oberflächen 3 verlaufend ausgerichtet sind.

Die Mineralfasern 2 weisen im Dämmstoffelement 1 einen Verlauf rechtwinklig zu den großen Oberflächen 3 auf, so dass das Dämmstoffelement 1 in Richtung der Flächennormalen der großen Oberflächen 3 drucksteif und in Richtung der Flächennormalen der Seitenflächen 4 demgegenüber flexibel bzw. kompressibel ausgebildet ist.

Im Bereich einer ersten Seitenfläche 4 hat das Dämmstoffelement 1 eine als Feder 6 ausgebildete Profilierung 5. Die gegenüberliegend angeordnete Seitenfläche 4 weist eine mit der Feder 6 korrespondierend ausgebildete Nut 7 als Profilierung 5 auf. Die Nut 7 ist im Bereich eines sich aus der Seitenflächen 4 erhebenden Vorsprungs 8 angeordnet.

Die Feder 6 ist mittig im Bereich eines Vorsprungs 9 angeordnet, der sich aus der Seitenfläche 4 heraushebt.

Das Dämmstoffelement 1 weist eine Beschichtung 10 auf, die teilflächig auf den Vorsprüngen 8, 9 angeordnet ist. Hierbei ist die Beschichtung 10 im Bereich der parallel zu den großen Oberflächen 3 verlaufenden Flächen 11 angeordnet, wobei auch die geringfügig von der Parallelität zu den großen Oberflächen 3 abweichenden Flankenflächen der Nut 7 bzw. der Feder 6 mit der Beschichtung 10 beschichtet sind.

Demgegenüber weist die Nut 7 eine als Nutgrund ausgebildete Fläche 12 auf, die parallel zu der unbeschichteten Seitenfläche 4 im Bereich des Vorsprungs 8 verläuft und ebenfalls unbeschichtet ausgebildet ist.

In gleicher Weise ist auch die parallel zur Seitenfläche 4 im Bereich des Vorsprungs 9 angeordnete und als Stirnfläche ausgebildete Fläche 12 der Feder 6 unbeschichtet ausgebildet, so dass die Kompressibilität und die Flexibilität der Feder 6 bzw. der Nut 7 im Bereich der unbeschichteten Flächen 12 im Hinblick auf ein dichtendes Zusammenfügen benachbarter Dämmstoffelemente 1 erhalten bleibt.

Die Beschichtung 10 ist auf den Flächen 11 angeordnet und erstreckt sich als Imprägnierung 13 in einen oberflächennahen Bereich des Dämmstoffelementes 1.

Die Beschichtung des Dämmstoffelementes 1 gemäß Figur 1 besteht aus einer Dispersions-Silikatfarbe und einer zuvor aufgetragenen Grundierung aus einem Wasserglas, wobei die Beschichtung filmbildend ausgebildet ist.

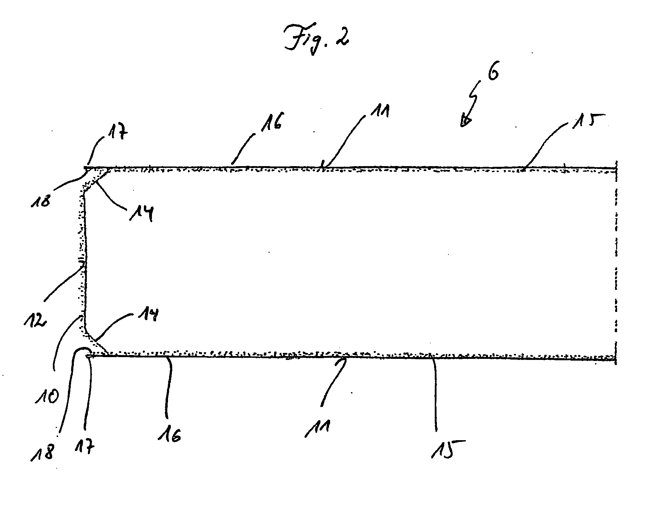

Eine alternative Ausgestaltung einer Feder 6 eines in Figur 2 nicht näher dargestellten Dämmstoffelementes 1 ist in Figur 2 dargestellt. Es ist zu erkennen, dass die als Stirnfläche ausgebildete Fläche 12 bei der Ausführungsform gemäß Figur 2 mit einer Beschichtung 10 überdeckt ist. In ihrem Kantenbereich weist die Stirnfläche 12 Abfasungen 14 auf, über die die Stirnfläche 12 in die Flächen 11 übergeht.

Auf den Flächen 11 ist eine Kleberschicht 15 aufgetragen, mit der eine Kaschierung 16 aus einer Metallfolie mit den Flächen 11 verklebt ist. Die Kaschierung 16 weist freie Endabschnitte 17 auf, die an ihren den Abfasungen 14 zugewandten Flächen mit Kleber 18 beschichtet sind.

Die in Figur 2 nicht näher dargestellten Mineralfasern verlaufen im Wesentlichen rechtwinklig zu den Flächen 11, so dass die Feder 6 in Richtung der Flächennormalen der Fläche 12 geringfügig kompressibel ist. Die Kompressibilität der Feder 6 ist hierbei im Wesentlichen durch die Kaschierung 16 bestimmt.

## Patentansprüche

1. Dämmstoffelement aus Mineralfasern (2), vorzugsweise aus Steinwolle, in Form einer Platte oder einer Bahn, mit zwei großen Oberflächen (3), die im Abstand und parallel zueinander verlaufend angeordnet und über Seitenflächen (4) miteinander verbunden sind, wobei die Seitenflächen (4) rechtwinklig zueinander ausgerichtet sind und zumindest eine Seitenfläche (4) eine Profilierung (5), insbesondere in Form einer Feder (6) oder einer Nut (7) aufweist, wobei die Seitenflächen (4) im Bereich der Profilierung (5) eine die Profilierung (5) stabilisierende Beschichtung (10) aufweisen, **dadurch gekennzeichnet, dass** die Beschichtung (10) auf Flächen (11) angeordnet ist, die im Wesentlichen parallel zu den großen Oberflächen (3) ausgerichtet sind und wobei Flächen (12), die im Wesentlichen parallel zu den Seitenflächen (4) ausgerichtet sind frei von der die Profilierung stabilisierenden Beschichtung (10) sind.

2. Dämmstoffelement nach Anspruch 1,
**dadurch gekennzeichnet,**
**dass** die Beschichtung (10) aus einer Dispersionssilikatfarbe nach DIN 18363 besteht.

3. Dämmstoffelement nach Anspruch 1,
**dadurch gekennzeichnet,**
**dass** die Beschichtung (10) aus Wasserglas, insbesondere aus Kalium-Wasserglas und/oder Natriurn-Wasserglas besteht.

4. Dämmstoffelement nach Anspruch 3,
**dadurch gekennzeichnet,**
**dass** das Wasserglas mit einer Polymer-Dispersion und/oder Füllstoffen, wie beilspielsweise Dolomit, Kaolin oder dergleichen gemischt ist.

5. Dämmstoffelement nach Anspruch 1,
**dadurch gekennzeichnet,**
**dass** die Beschichtung (10) mehrschichtig ausgebildet ist, wobei zumindest eine Schicht aus Wasserglas und zumindest eine Schicht aus einer Polymer-Dispersion bestehen.

6. Dämmstoffelement nach Anspruch 1,
**dadurch gekennzeichnet,**
**dass** die Beschichtung (10) ein anorganisches Bindemittel, insbesondere organisch modifizierte Silane aufweist.

7. Dämmstoffelement nach Anspruch 1,
**dadurch gekennzeichnet,**
**dass** die Mineralfasern (2) im Wesentlichen rechtwinklig und/oder schräg zu den großen Oberflächen (3) ausgerichtet sind.

8. Dämmstoffelement nach Anspruch 1,
**dadurch gekennzeichnet,**
**dass** die Beschichtung (10) filmbildend und insbesondere Wasserdampf bremsend ausgebildet ist.

9. Dämmstoffelement nach Anspruch 1,
**dadurch gekennzeichnet,**
**dass** die Beschichtung (10) eine Kaschierung, insbesondere eine Metallfolie aufweist.

10. Dämmstoffelement nach Anspruch 1,
**dadurch gekennzeichnet,**
**dass** die Profilierung (5) abgefaste Bereiche (14) aufweist.

11. Dämmstoffelement nach Anspruch 1,
**dadurch gekennzeichnet,**
**dass** die Beschichtung (10) teilweise als Imprägnierung (13) in einen oberflächennahen Bereich der Profilierung (5) eingearbeitet ist.

12. Dämmstoffelement nach Anspruch 1,
**dadurch gekennzeichnet,**
**dass** die Profilierung (5) im Bereich der im Wesentlichen parallel zu den Seitenflächen (4) ausgerichteten Flächen (12) eine Beschichtung (10) aufweist, die von der die Profilierung stabilisierenden Beschichtung (10) auf den im Wesentlichen parallel zu den großen Oberflächen (3) ausgerichteten Flächen (11) der Profilierung (5) abweicht.

13. Dämmstoffelement nach Anspruch 12,
**dadurch gekennzeichnet,**
**dass** die Beschichtung (10) im Bereich der im Wesentlichen parallel zu den Seitenflächen (4) ausgerichteten Flächen (12) aus einer silikatischen Grundierung und einer darauf aufgebrachten Dispersions-Silikatfarbe gemäß DIN 18363 oder einer darauf aufgebrachten Farbe auf der Basis von Synthese-Latices besteht.

14. Verfahren zur Herstellung eines Dämmstoffelementes (1) aus Mineralfasern (2), vorzugsweise aus Steinwolle, in Form einer Platte oder einer Bahn, mit zwei großen Oberflächen (3), die im Abstand und parallel zueinander verlaufend angeordnet und über Seitenflächen (4) miteinander verbunden sind, wobei die Seitenflächen (4) rechtwinklig zueinander ausgerichtet sind und zumindest eine Seitenfläche (4) eine Profilierung (5), insbesondere in Form einer Feder (6) oder einer Nut (7) aufweist, **dadurch gekennzeichnet, dass** eine die Profilierung (5) stabilisierende Beschichtung (10), insbesondere deren Komponenten auf Flächen (11) aufgebracht wird, die im Wesentlichen parallel zu den großen Oberflächen (3) ausgerichtet sind, während Flächen (12), die im Wesentlichen parallel zu den Seitenflächen (4) ausgerichtet sind frei von der die Profilierung stabilisierenden Beschichtung (10) gehalten werden.

15. Verfahren nach Anspruch 14,
**dadurch gekennzeichnet,**
**dass** die Beschichtung (10) aufgespritzt wird.

16. Verfahren nach Anspruch 14,
**dadurch gekennzeichnet,**
**dass** die Komponenten der Beschichtung (10) nacheinander aufgetragen, insbesondere aufgespritzt werden.

17. Verfahren nach Anspruch 14,
**dadurch gekennzeichnet,**
**dass** die Komponenten der Beschichtung (10) vor dem Auftragen gemischt werden.

## Claims

1. Insulating element made of mineral fibers (2), preferably of rock wool, in the form of a board or web, having two large surfaces (3) which are arranged at a distance from each other and so as to extend parallel to each other and are connected to each other via lateral surfaces (4), said lateral surfaces (4) being aligned at right angles to each other, and at least one lateral surface (4) including a profile (5), particularly in the form of a tongue (6) or a groove (7), wherein the lateral surfaces (4) have a lining (10) in the region of the profile (5), which lining (10) stabilizes the profile (5),
**characterized in**
**that** the lining (10) is provided on surfaces (11) which are aligned substantially parallel to the large surfaces (3), and wherein surfaces (12) which are aligned substantially parallel to the lateral surfaces (4) are free from the profile-stabilizing lining (10).

2. Insulating element according to claim 1,
**characterized in**
**that** the lining (10) consists of a silicate dispersion paint according to DIN 18363.

3. Insulating element according to claim 1,
**characterized in**
**that** lining (10) consists of water glass, in particular potassium water glass and/or sodium water glass.

4. Insulating element according to claim 3,
**characterized in**
**that** the water glass is mixed with a polymer dispersion and/or fillers such as for example dolomite, caoline or the like.

5. Insulating element according to claim 1,
**characterized in**
**that** the lining (10) is arranged in multiple layers, wherein at least one layer consists of water glass and at least one layer consists of a polymer dispersion.

6. Insulating element according to claim 1,
**characterized in**
**that** the lining (10) includes an inorganic binder, in particular organically modified silanes.

7. Insulating element according to claim 1,
**characterized in**
**that** the mineral fibers (2) are substantially oriented at right angles and/or inclined to the large surfaces (3).

8. Insulating element according to claim 1,
**characterized in**
**that** the lining (10) is constructed so as to be film-forming and particularly forming a water vapor barrier.

9. Insulating element according to claim 1,
**characterized in**
**that** the lining (10) includes a lamination, in particular a metal foil.

10. Insulating element according to claim 1,
**characterized in**
**that** the profile (5) includes chamfered portions (14).

11. Insulating element according to claim 1,
**characterized in**
**that** the lining (10) is partially incorporated as an impregnation (10) in a near-surface area of the profile (5).

12. Insulating element according to claim 1,
**characterized in**
**that** in the region of the surfaces (12) which are substantially aligned parallel to the lateral surfaces (4), the profile (5) includes a lining (10) which differs from the profile-stabilizing lining (10) on the surfaces (11) of the profile (5) which are aligned substantially parallel to the large surfaces (3).

13. Insulating element according to claim 12,
**characterized in**
**that** the lining (10) in the region of the surfaces (12) which are substantially aligned parallel to the lateral surfaces (4) consists of a silicate primer and of a silicate dispersion paint according to DIN 18363 applied to it or of a synthesis latices-based paint applied to it.

14. Method for producing an insulating element (1) from mineral fibers (2), preferably from rock wool, in the form of a board or web, having two large surfaces (3) which are arranged at a distance from each other and so as to extend parallel to each other and are connected to each other via lateral surfaces (4), said lateral surfaces (4) being aligned at right angles to each other, and at least one lateral surface (4) having a profile (5), particularly in the form of a tongue (6) or a groove (7),
**characterized in**
**that** a lining (10) stabilizing the profile (5), in particular the components of the lining are applied to surfaces (11) which are aligned substantially parallel to the large surfaces (3), whereas surfaces (12) which are aligned substantially parallel to the lateral surfaces (4) are kept free from the profile-stabilizing lining (10).

15. Method according to claim 14,
**characterized in**
**that** the lining (10) is sprayed-on.

16. Method according to claim 14,
**characterized in**
**that** the components of the lining (10) are applied and especially sprayed-on one after the other.

17. Method according to claim 14,
**characterized in**
**that** the components of the lining (10) are mixed prior to being applied.

## Revendications

1. Elément en matériau isolant en fibres minérales (2), en particulier en laine minérale, en forme de plaque ou de lé, avec deux grandes surfaces (3) qui sont placées espacées et parallèlement l'une de l'autre et qui sont reliées l'une à l'autre par des surfaces latérales (4), les surfaces latérales (4) étant orientées à angle droit l'une par rapport à l'autre et au moins une surface latérale (4) présentant un profilage (3), en particulier en forme de languette (6) ou de rainure (7), les surfaces latérales (4) présentant, dans la zone du profilage (5), une enduction (10) qui stabilise le profilage (5), **caractérisé en ce que** l'enduction (10) est placée sur des surfaces (11) qui sont orientées substantiellement parallèlement aux grandes surfaces (3) et des surfaces (12) qui sont orientées substantiellement parallèlement aux surfaces latérales (4) étant exemptes de l'enduction (10) qui stabilise le profilage.

2. Elément en matériau isolant selon la revendication 1,
**caractérisé en ce**
**que** l'enduction (10) est constituée par une peinture de dispersion au silicate selon DIN 18363.

3. Elément en matériau isolant selon la revendication 1,
**caractérisé en ce**
**que** l'enduction (10) est en verre soluble, en particulier en verre soluble au potassium et/ou en verre soluble au sodium.

4. Elément en matériau isolant selon la revendication 3,
**caractérisé en ce**
**que** le verre soluble est mélangé à une dispersion au polymère et/ou aux matières de remplissage comme, par exemple, de la dolomite, du kaolin ou équivalent.

5. Elément en matériau isolant selon la revendication 1,
**caractérisé en ce**
**que** l'enduction (10) est configurée en plusieurs couches, au moins une couche étant constituée par du verre soluble et au moins une couche par une dispersion au polymère.

6. Elément en matériau isolant selon la revendication 1,
**caractérisé en ce**
**que** l'enduction (10) présente un liant anorganique, en particulier des silanes modifiés organiquement.

7. Elément en matériau isolant selon la revendication 1,
**caractérisé en ce**
**que** les fibres minérales (2) sont orientées substantiellement à angle droit et/ou obliquement par rapport aux grandes surfaces (3).

8. Elément en matériau isolant selon la revendication 1,
**caractérisé en ce**
**que** l'enduction (10) est configurée en formant une pellicule et en particulier en freinant la vapeur d'eau.

9. Elément en matériau isolant selon la revendication 1,
**caractérisé en ce**
**que** l'enduction (10) présente un contrecollage, en particulier une feuille de métal.

10. Elément en matériau isolant selon la revendication 1,
**caractérisé en ce**
**que** le profilage (5) présente des zones chanfreinées (14).

11. Elément en matériau isolant selon la revendication 1,
**caractérisé en ce**
**que** l'enduction (10) est intégrée partiellement comme une imprégnation (13) dans une zone du profilage (5), zone qui est proche de la surface.

12. Elément en matériau isolant selon la revendication 1, **caractérisé en ce**
**que** le profilage (5) présente, dans la zone des surfaces (12) orientées substantiellement parallèlement aux surfaces latérales (4), une enduction (10) qui diffère de l'enduction (10) qui stabilise le profilage sur les surfaces (11) du profilage (5) qui sont orientées substantiellement parallèlement aux grandes surfaces (3).

13. Elément en matériau isolant selon la revendication 12, **caractérisé en ce**
**que** l'enduction (10) est constituée, dans la zone des surfaces (12) orientées substantiellement parallèlement aux surfaces latérales (4), par un apprêt contenant du silicate et par une peinture de dispersion au silicate selon DIN 18363 appliquée dessus ou une peinture appliquée dessus à base de latex de synthèse.

14. Procédé pour la fabrication d'un élément en matériau isolant (1) en fibres minérales (2), en particulier en laine minérale, en forme de plaque ou de lé, avec deux grandes surfaces (3) qui sont placées espacées et parallèlement l'une par rapport à l'autre et qui sont reliées l'une à l'autre par des surfaces latérales (4), les surfaces latérales (4) étant orientées à angle droit l'une par rapport à l'autre et au moins une surface latérale (4) présentant un profilage (3), en particulier en forme de languette (6) ou de rainure (7), **caractérisé en ce qu'**une enduction (10) qui stabilise le profilage (5), en particulier ses composants, est appliquée sur des surfaces (11) qui sont orientées substantiellement parallèlement aux grandes surfaces (3), tandis que des surfaces (12) qui sont orientées substantiellement parallèlement aux surfaces latérales (4) sont gardées exemptes de l'enduction (10) qui stabilise le profilage.

15. Procédé selon la revendication 14,
**caractérisé en ce**
**que** l'enduction (10) est appliquée par pulvérisation.

16. Procédé selon la revendication 14,
**caractérisé en ce**
**que** les composants de l'enduction (10) sont appliqués l'un après l'autre, en particulier par pulvérisation.

17. Procédé selon la revendication 14,
**caractérisé en ce**
**que** les composants de l'enduction (10) sont mélangés avant application.
